Europäisches Patentamt

**European Patent Office**

Office européen des brevets

(11) Publication number: **0 131 420**
**B1**

## EUROPEAN PATENT SPECIFICATION

(45) Date of publication of patent specification: **27.01.88**

(51) Int. Cl.⁴: $C\ 08\ F\ 10/02$, $C\ 08\ F\ 4/68$

(21) Application number: **84304520.4**

(22) Date of filing: **02.07.84**

(54) Solution process for the preparation of polymers of alpha-olefins.

(30) Priority: **05.07.83 GB 8318206**

(43) Date of publication of application:
**16.01.85 Bulletin 85/03**

(45) Publication of the grant of the patent:
**27.01.88 Bulletin 88/04**

(84) Designated Contracting States:
**AT BE DE FR GB IT NL SE**

(56) References cited:
**EP-A-0 057 050**
**DE-A-2 600 336**
**GB-A- 879 304**

(73) Proprietor: **DU PONT CANADA INC.**
**Box 2200 Streetsville Postal Station**
**Mississauga Ontario L5M 2H3 (CA)**

(72) Inventor: **Hamilton, Michael Andrew**
**944 Kenshaw Street**
**Kingston Ontario, K7P 1M1 (CA)**
Inventor: **Harbourne, David Alan**
**180 Glen Castle Road**
**Kingston Ontario, K7M 4N6 (CA)**
Inventor: **Russell, Charles George**
**975 Lincoln Drive**
**Kingston Ontario, K7M 4Z3 (CA)**
Inventor: **Zboril, Vaclav George**
**613 Pimlico Place**
**Kingston Ontario, K7L 5T7 (CA)**
Inventor: **Mulhaupt, Rolf**
**1309 W 13th Street, Apt. 3**
**Wilmington Delaware, 19896 (CA)**

(74) Representative: **Ellis, John Clifford Holgate et al**
**MEWBURN ELLIS & CO. 2/3 Cursitor Street**
**London EC4A 1BQ (GB)**

The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 131 420

## Description

The present invention relates to a process for the preparation of polymers of α-olefins, especially homopolymers of ethylene and copolymers of ethylene and higher α-olefins having improved colour. In particular the invention relates to a solution process for the preparation of polymers of α-olefins in which α-olefin monomer is polymerized in the presence of a coordination catalyst capable of being used at relatively high polymerization temperatures, especially temperatures above 150°C. The activator of the coordination catalyst is an alkylsiloxalane.

Polymers of ethylene, for example, homopolymers of ethylene and copolymers of ethylene and higher α-olefins, are used in large volumes for a wide variety of end-uses, for example, in the form of film, fibres, moulded or thermoformed articles, pipe, coatings and the like.

There are two types of processes for the manufacture of polyethylene that involve the polymerization of monomers in the presence of a coordination catalyst viz. those which operate at temperatures below the melting or solubilization temperature of the polymer and those which operate at temperatures above the melting or solubilization temperature of the polymer. The latter are referred to as "solution" processes, an example of which is described in Canadian Patent 660 869 of A. W. Anderson, E. L. Fallwell and J. M. Bruce, which issued 1963 April 9. In a solution process the process is operated so that both the monomer and polymer are soluble in the reaction medium. Under such conditions accurate control over the degree of polymerization, and hence the molecular weight of the polymer obtained, is achieved by control of the reaction temperature. It is believed that the termination reaction controlling the molecular weight of the polymer is highly dependent on temperature. The molecular weight of the polymer may be further controlled through the use of relatively small amounts of hydrogen, as is described in Canadian Patent 703 704 of C. T. Elston, which issued 1965 February 9.

There are a number of advantages to a solution polymerization process, for example, the ability to control the molecular weight of the polymer obtained, the ability to operate the process as a continuous process and to recover the polymer by precipitation without the need for washing, the efficient use of catalyst, the properties of the polymer obtained and the possibility of efficient use of energy.

A disadvantage of a solution process is that part of the catalyst remains in the polymer of ethylene. Such catalyst, which may be referred to herein as "catalyst residue", may contribute to the colour of the polymer obtained and to degradation of the polymer during subsequent processing of the polymer e.g., in extrusion, injection moulding and the like, and/or on exposure of fabricated articles to ultra violet light. The amount of catalyst residue is related, at least in part, to the overall activity of the catalyst employed in the polymerization step of the process as the higher the overall activity of the catalyst the less catalyst that is, in general, required to effect polymerization at an acceptable rate. Catalysts of relatively high overall activity are therefore preferred in solution polymerization processes. ·

Two important factors in determining the overall activity of a catalyst are the instantaneous activity of the catalyst and the stability of the catalyst under the operating conditions, especially at the operating temperature. Many catalysts that are stated to be very active in low temperature polymerization processes also exhibit high instantaneous activity at the higher temperatures used in solution processes. However such catalysts tend to decompose within a very short time in a solution process and thus the overall activity is disappointingly low. Such catalysts are of no commercial interest for solution processes. Other catalysts may exhibit acceptable overall activity at the higher temperatures of a solution process but show tendencies to yield polymers of broad molecular weight distribution or of too low a molecular weight to be commercially useful for the manufacture of a wide range of useful products. The requirements for and the performance of a catalyst in a solution polymerization process are quite different from those of a catalyst in a low temperature polymerization process, as will be understood by those skilled in the art.

A process for the preparation of polymers of ethylene at high temperatures in which the catalyst in a coordination catalyst consisting of titanium tetrachloride, a vanadium compound and aluminum trialkyl and capable of being used in a solution process is described in Canadian Patent 635 823 of D. B. Ludlum, N. G. Merckling and L. H. Rombach, which issued 1962 February 06. The preparation of polymers of ethylene in the presence of heat-treated polymerization catalysts is described in published European patent application No. 57 050 of V. G. Zboril, M. A. Hamilton and R. W. Rees, published 1982 August 04, and No. 56 684 of V. G. Zboril and M. A. Hamilton, published 1982 July 28.

A solution polymerization process for the preparation of homopolymers of ethylene and copolymers of ethylene and higher α-olefins, in which the catalyst is a coordination catalyst prepared by heat-treating a particular admixture of a titanium halide, vanadium oxytrihalide and an organoaluminum compound and then activating with an alkylsiloxalane compound has now been found. The catalyst has good activity and stability at the high temperatures employed in a solution polymerization process and results in polymer of improved colour.

Accordingly the present invention provides a solution process for the preparation of high molecular weight polymers of α-olefins selected from the group consisting of homopolymers of ethylene and copolymers of ethylene and $C_3$—$C_{12}$ α-olefins, said process comprising feeding monomer selected from the group consisting of ethylene and mixtures of ethylene and at least one $C_3$—$C_{12}$ α-olefin, a coordination catalyst and inert hydrocarbon solvent to a reactor, polymerizing said monomer at a temperature in the range of 105—320°C and recovering the polymer so obtained, said coordination catalyst having been

2

obtained by combining a first component with a second component, said first component being prepared by a method selected from the group consisting of (i) admixing a solution of an organoaluminum compound in inert hydrocarbon solvent with a solution of titanium tetrahalide and vanadium oxytrihalide in inert hydrocarbon solvent at a temperature of less than 30°C and heating the resultant admixture to a temperature of 150—300°C for a period of from 5 seconds to 60 minutes and (ii) admixing a solution of an organoaluminum compound in inert hydrocarbon solvent with a solution of titanium tetrahalide in inert hydrocarbon solvent at a temperature of less than 30°C, heating the resultant admixture to a temperature of 150—300°C for a period of from 5 seconds to 60 minutes and admixing vanadium oxytrihalide with the admixture so obtained, said organoaluminum compound being of the formula $AlR_nX_{3-n}$ and being admixed with the titanium and vanadium compounds so that the atomic ratio of aluminum in the first component to titanium plus vanadium is in the range 0.2—2.0 where R is alkyl, cycloalkyl, aryl or alkyl-substituted aryl and has 1—20 carbon atoms; n=1, 1.5, 2 or 3 and X is halogen, characterised in that the second component is a solution of an alkylsiloxalane in inert hydrocarbon solvent.

In an embodiment of the process of the present invention, the alkylsiloxalane is selected from the group consisting of alkylsiloxalanes of the formula $R'_3SiO(R'_2SiO)_mAlR'_2$ where each R' is independently selected from the group consisting of alkyl, cycloalkyl, aryl or alkyl-substituted aryl and has 1—20 carbon atoms and m is 0 or an integer.

In a preferred embodiment, the alkyl groups of the alkylsiloxalane are alkyl or cycloalkyl, especially methyl, ethyl or cyclohexyl and m is 0 to 4.

In another embodiment, the catalyst components are mixed in-line and fed to the reactor without separation of any fraction therefrom.

In a further embodiment, the recovery of the polymer includes the steps of deactivating the catalyst in the solution obtained from the reactor by sequentially admixing therewith a minor amount of water followed by a solution of a salt of an alkaline earth metal or zinc and an aliphatic carboxylic acid dissolved in hydrocarbon solvent, separating the hydrocarbon solvent and other volatile matter from the resultant solution and recovering a composition comprising said high molecular weight polymer, the amount of water being 0.25—1.5 mol of water per mole of halogen plus alkyl radicals plus $R_3SiO$—groups.

In yet another embodiment, the recovered polymer is treated with saturated steam at about atmospheric pressure for a period of 1 to 16 hours. The steam temperature should be controlled below the agglomeration temperature of the polymer.

The present invention also provides a coordination catalyst for the preparation of high molecular weight polymers of α-olefins, said catalyst having been obtained by combining a first component with a second component, said first component being prepared by a method selected from the group consisting of (i) admixing a solution of an organoaluminum compound in inert hydrocarbon solvent with a solution of titanium tetrahalide and vanadium oxytrihalide in inert hydrocarbon solvent at a temperature of less than 30°C and heating the resultant admixture to a temperature of 150—300°C for a period of from 5 seconds to 60 minutes and (ii) admixing a solution of an organoaluminum compound in inert hydrocarbon solvent with a solution of titanium tetrahalide in inert hydrocarbon solvent at a temperature of less than 30°C, heating the resultant admixture to a temperature of 150—300°C for a period of from 5 seconds to 60 minutes and admixing vanadium oxytrihalide with the admixture so obtained, said organoaluminum compound being of the formula $AlR_nX_{3-n}$ and being admixed with the titanium and vanadium compounds so that the atomic ratio of aluminum in the first component to titanium plus vanadium is in the range 0.2—2.0 where R is alkyl, cycloalkyl, aryl or alkyl-substituted aryl and has 1—20 carbon atoms; n=1, 1.5, 2 or 3 and X is halogen, characterised in that the second component is a solution of an alkylsiloxalane in inert hydrocarbon solvent.

The present invention is directed to a process for the preparation of high molecular weight polymers of α-olefins, such polymers being intended for fabrication into articles e.g. by extrusion, injection moulding, thermoforming or rotational moulding. In particular the polymers of α-olefins are homopolymers of ethylene and copolymers of ethylene and higher α-olefins, especially such higher α-olefins having 3 to 12 carbon atoms i.e. $C_3$—$C_{12}$ α-olefins, examples of which are 1-butene, 1-hexene and 1-octene. In addition cyclic endomethylenic dienes may be fed to the process with the ethylene or mixtures of ethylene and $C_3$—$C_{12}$ α-olefin. Such polymers are known.

In the process of the present invention, monomer, a coordination catalyst and inert hydrocarbon solvent are fed to a reactor. The monomer may be ethylene or mixtures of ethylene and at least one $C_3$—$C_{12}$ α-olefin, preferably ethylene or mixtures of ethylene and the $C_4$—$C_{10}$ α-olefin. The coordination catalyst is formed by combining a first component with a second component. Two methods may be used to obtain the first component. In one method, the first component is obtained by admixing, rapidly, a solution of an organoaluminum compound in inert hydrocarbon solvent with a solution of titanium tetrahalide and vanadium oxytrihalide in inert hydrocarbon solvent so that the atomic ratio of aluminum to titanium plus vanadium is in the range of 0.2—2.0, especially 0.3—1.0. The preferred ratio may depend on the particular organoaluminum compound used in the preparation of the catalyst. The resultant admixture is then heat treated at 150—300°C for a period of 5 seconds to 60 minutes, especially 10 seconds to 10 minutes.

In the second method, the first component is obtained by admixing, rapidly, a solution of an organoaluminum compound in inert hydrocarbon solvent with a solution of titanium tetrahalide in inert solvent. The resultant admixture is then heat-treated at 150—300°C for a period of 5 seconds to 60 minutes, especially 10 seconds to 10 minutes. Vanadium oxytrihalide, optionally admixed with titanium tetrahalide, is then admixed with the heat-treated admixture so that the atomic ratio of aluminum to titanium plus vanadium is in the range of 0.2—2.0, especially 0.3—1.0. The preferred ratio may depend on the particular organoaluminum compound used in the preparation of the catalyst.

The organoaluminum compound is of the general formula $AlR_nX_{3-n}$ where R is an alkyl, cycloalkyl, aryl or alkyl-substituted aryl and has 1 to 20 carbon atoms, n is 3, 2, 1.5 or 1, and X is a halogen. In preferred embodiments n is 3 or, especially, 2. R is preferably phenyl or alkyl, particularly alkyl of 1—4 carbon atoms. X is preferably bromine or chlorine. In preferred embodiments the organoaluminum compound is trialkyl aluminum, especially triethyl aluminum, or dialkylaluminum chloride, especially diethylaluminum chloride.

The second component is a solution of an alkysiloxalane in inert hydrocarbon solvent. The alkylsiloxalane may be of the formula $R'_3SiO(R'_2SiO)_mAlR'_2$ where each R' is independently selected from the group consisting of alkyl, cyclalkyl, aryl or alkyl-substituted aryl and has 1—20 carbon atoms, especially alkyl or cycloalkyl of 1—6 carbon atoms, and m is 0 or an integer, preferably 0 to 4. Preferably the alkyl groups are methyl or ethyl. Examples of such alkylsiloxalanes are $EtMe_2SiOMe_2SiOAlEt_2$, $Et_2AlOSiMe_3$, $Et_2AlOSiEt_3$, $Et_2AlOSi(C_6H_{11})_3$, $Et_2AlOSiEtMe_2$ and $EtMe_2SiO(Me_2SiO)_2Me_2SiOAlEt_2$, and isomers thereof, where Me=methyl and Et=ethyl. Methods for the preparation of such alkylsiloxalanes are known in the art or are described in EP—A—0133750.

The preferred halides of the titanium and vanadium compounds are bromine and especially chlorine.

In the process of the present invention the first component contains both titanium tetrahalide and vanadium oxytrihalide, preferably vanadium oxytrichloride. The solution of titanium tetrahalide and vanadium oxytrihalide is such that the atomic ratio of aluminum to titanium plus vanadium in the first component is in the range 0.2—2.0 and the atomic ratio of the aluminum in the second component to titanium plus vanadium is desirably in the range 0.9—10, preferably 1.0—4.0. In a preferred embodiment of the process of the present invention the ratio of titanium to vanadium on an atomic basis is at least 0.25:1. In particularly preferred embodiments, the ratio of titanium to vanadium on an atomic basis is in the range 0.5:1 to 30:1 and especially 0.6:1 to 10:1. A preferred range is 0.8:1 to 1.2:1.

The concentration of the components of the solutions used in the preparation of the catalyst is not critical and is primarily governed by practical considerations. The combining of the components is exothermic and the resultant evolution of heat is a factor in determining the upper concentration limits of the solutions. Concentrations up to 50% on a weight basis, may however be used. The lower concentration limits are related to practical considerations for example, the amount of solvent required and the equipment being used. Concentrations of as low as 25 ppm, on a weight basis, may be used but higher concentrations, for example 100 ppm and above, are preferred.

It is important to admix the two solutions of the first component at ambient or lower temperatures i.e. lower than 30°C, and permit reaction to occur for some minimum time. This time depends on the type of organoaluminum compound used and may be as short as 15 seconds after adequate mixing has been achieved. The subsequent heat treatment of the admixture of the first component may be performed by, for example, heating the admixture in a heat exchanger or by addition of a heated inert hydrocarbon solvent. Heat treatment is carried out at 150—300°C, especially 170 to 250°C. The admixture should be held at the elevated temperature for a period of time in the range of from 5 seconds to 60 minutes, preferably 10 seconds to 10 minutes and especially 1 to 3 minutes, before it is combined with a second component.

The first component may be fed into the polymerization reactor separately from the second component or the first and second components may be combined prior to being fed to the reactor.

The solvent used in the preparation of the coordination catalyst is an inert hydrocarbon, in particular a hydrocarbon that is inert with respect to the coordination catalyst. Such solvents are known and include for example, hexane, heptane, octane, cyclohexane, methylcyclohexane and hydrogenated naphtha. The solvent used in the preparation of the catalyst is preferably the same as that fed to the reactor for the polymerization process.

The coordination catalyst described herein is used in the process of the present invention without separation of any of the components of the catalyst. In particular neither liquid nor solid fractions are separated from the catalyst before it is fed to the reactor. Thus the preparation of the catalyst is a simple procedure and in a preferred embodiment involves in-line mixing and heat-treatment of the catalyst that is to be fed to the reactor.

The catalyst described herein may be used, according to the process of the present invention, over the wide range of temperature that may be used in an α-olefin polymerization process operated under solution conditions. For example, such polymerization temperatures may be in the range of 105—320°C and especially in the range 105—310°C. The pressures used in the process of the present invention are those known for solution polymerization processes, for example, pressures in the range of about 4—20 MPa.

In the process of the present invention the α-olefin monomers are polymerized in the reactor in the presence of the catalyst. Pressure and temperature are controlled so that the polymer formed remains in solution. Small amounts of hydrogen, for example 1—40 parts per million by weight, based on the total solution fed to the reactor, may be added to the feed in order to improve control of the melt index and/or molecular weight distribution and thus aid in the production of a more uniform product, as is disclosed in the aforementioned Canadian Patent 703 704. The catalyst is usually deactivated, for example by contacting with a fatty acid, an alkaline earth metal salt of an aliphatic carboxylic acid or an alcohol, immediately after the polymer leaves the reactor.

In a preferred embodiment of the present invention, the catalyst is deactivated immediatley after the polymer leaves the reactor using a two-stage deactivator system. The catalyst is admixed, sequentially, with a minor amount of water followed by a solution of either (a) a salt of an alkaline earth metal or zinc and an aliphatic monocarboxylic acid dissolved in hydrocarbon solvent or (b) a solution of an alcohol dissolved in hydrocarbon solvent. A solution of such a salt is preferred, especially a calcium salt of a $C_8/C_{10}$ carboxylic acid e.g. the calcium salt of 2-ethyl hexanoic acid. A slurry of an alkaline earth metal salt of an aliphatic monocarboxylic acid, e.g. calcium stearate, in hydrocarbon solvent may be used as the second deactivator.

The amount of water added is preferably 0.25—1.5 moles of water, especially about one mole of water, per mole of halogen plus alkyl plus $R'_3SiO$—radicals, where R is as defined hereinbefore. The second part of the deactivator, e.g. the alkaline earth metal salt, is used in an amount that is 1.0 to 2.0 times the stoichiometric amount of halogen radicals. The second deactivator may contain excess carboxylic acid or hydroxylic solubilizing aids that should be chosen so as to optimize the colour of the polymer subsequently obtained. It is preferred that the salt be added after any solution heaters but prior to the flashing of solvent.

Embodiments of the preferred deactivator are disclosed in published European patent application No. 67 645 of M. A. Hamilton, D. A. Harbourne and V. G. Zboril, published 1982 December 22.

The hydrocarbon solvent used for the deactivator is preferably the same as the solvent used in the polymerization process. If a different solvent is used, it must be compatible with the solvent used in the polymerization process, not cause precipitation of any component of the polymerization mixture and not cause adverse effects on the solvent recovery system associated with the polymerization process.

After deactivation of the catalyst the polymer may be passed through a bed of activated alumina or bauxite which removes part or all of the deactivated catalyst residues; however, under some circumstances it may not be necessary to remove such residues from the polymer. The solvent may then be flashed off from the polymer which subsequently may be extruded into water and cut into pellets or other suitable comminuted shapes. The recovered polymer may then be treated with saturated steam at atmospheric pressure to, for example, reduce the amount of volatile materials and improve polymer colour. The treatment may be carried out for about 1 to 16 hours, following which the polymer may be dried and cooled with a stream of air for 1 to 4 hours. Pigments, antioxidants and other additives may be added to the polymer either before or after the polymer is initially formed into pellets or other comminuted shapes.

The antioxidant incorporated into polymer obtained from the process of the present invention, may, in embodiments, be a single antioxidant e.g. a hindered phenolic antioxidant, or a mixture of antioxidants e.g. a hindered phenolic antioxidant combined with a secondary antioxidant e.g. a phosphite. Both types of antioxidant are known in the art. For example, the ratio of phenolic antioxidant to secondary antioxidant may be in the range 0.25:1 to 1:1 with the total amount of antioxidant being in the range of 400 to 2000 ppm.

As is illustrated in the examples below, the heat-treated catalyst activated with an alkylsiloxalane exhibits good stability at very high temperatures and results in the formation of polymer of improved colour when compared with polymer obtained with a catalyst activated with an organoaluminum compound instead of the alkylsiloxalane. It will also be noted that the alkylsiloxalane is added after heat-treatment of the catalyst and that the catalyst may be prepared by in-line mixing of liquid components without isolation, separation and/or purification of any intermediate products, which greatly reduces the cost of using such catalyst.

The process of the present invention may be used to prepare homopolymers of ethylene and copolymers of ethylene and higher α-olefins having densities in the range of, for example, 0.900—0.970 g/cm³ and especially 0.915—0.965 $g/cm^3$, the polymers of higher density, e.g. 0.960 and above, being homopolymers. Such polymers may have a melt index, as measured by the method of ASTM D-1238, condition E, in the range of, for example, 0.1—200, and especially in the range of 0.3—120. The polymers may be manufactured with narrow or broad molecular weight distribution. For example, the polymers may have a stress exponent, a measure of molecular weight distribution, in the range of 1.1—2.5 and especially in the range of 1.3—2.0. Stress exponent is determined by measuring the throughput of a melt indexer at two stresses (2160 g and 6480 g loading) using the procedures of the ASTM melt index test method, and the following formula:

$$\text{Stress exponent} = \frac{1}{0.477} \log \frac{(\text{wt. extruded with 6480 g wt.})}{(\text{wt. extruded with 2160 g wt.})}$$

Stress exponent values of less than about 1.40 indicate narrow molecular weight distribution while values above about 2.00 indicate broad molecular weight distribution.

The polymers produced by the process of the present invention are capable of being fabricated into a wide variety of articles, as is known for homopolymers of ethylene and copolymers of ethylene and higher α-olefins.

Unless otherwise noted, in the examples hereinafter the following procedures were used:

The reactor was a 70 ml (depth=11.3 mm, diameter=88.9 mm) pressure vessel fitted with a six-bladed agitator having a diameter of 66.7 mm, a heating jacket, pressure and temperature controllers, two feed lines and an outlet line. The feed lines were located adjacent to the tips of the agitator blades while the outlet line was adjacent to the centre of the agitator. The catalyst precursors and other ingredients were prepared as solutions in cyclohexane which had been purified by being passed through a silica gel bed, stripped with nitrogen and passed through another silica gel bed followed by beds of a molecular sieve and of alumina. Ethylene was either dissolved in cyclohexane and then pumped into the reactor or, if higher feed rates of ethylene were desired, metered directly into the reactor. The rates of feed of the first and second components of the catalyst were adjusted to produce the desired conditions in the reactor.

The first component of the catalyst was prepared from the individual solutions by either (a) using in-line mixing viz. by admixing the solutions using a 4.57 mm ID "T" union, (b) using a high turbulence mixing zone viz. by injecting one solution through a 1.6 mm OD tubing placed axially in the centre of a 4.57 mm ID tube through which the other solution was being passed, or (c) by admixing the individual solutions in a vessel from which the resultant admixture was being withdrawn as required, the admixture in the vessel being agitated using a stream of purified nitrogen. The desired hold-up times were achieved by adjusting the length of the tubing through which the components were being passed. The reactor pressure was kept constant at 10 MPa. The pumping rates and temperatures were maintained constant during each experiment.

Two types of experiments were performed:

(a) Measurements of Catalyst Activity.

During these experiments, the initial (no conversion) monomer concentration in the reactor was 1—2 wt%. A deactivator (calcium 2-ethyl hexanoate (octoate) solution in cyclohexane, about 0.25% Ca) was injected into the reactor effluent at the reactor exit. The pressure of the stream was then reduced to about 110 kPa (Abs.) and the unreacted monomer was continuously stripped off with nitrogen. The amount of unreacted monomer was monitored by gas chromatograph. The catalyst activity was defined as:

$$Kp = \frac{S.V. \times d[Q/(1-Q)]}{dc}$$

where Q is the conversion, i.e. the fraction of ethylene (monomer) converted to polymer at the optimum ratio of the first and second components, S.V. is the space velocity in the stirred reactor in $min^{-1}$ and c is the catalyst concentration, based on titanium plus vanadium, in the reactor in mmol/l. Kp was obtained by measuring the conversion Q at various concentrations of the first and second components.

(b) Measurement of Polymer Colour.

An ethylene concentration of up to 15 wt.% was used in these experiments. The reactor effluent was passed through a 4.57 mm ID tubing heated to a temperature of 286°C prior to injection of the first deactivator. The hold-up time in the tube was about 0.2 min. After injection of the first deactivator, the resultant stream was passed through a further length of 4.57 mm ID tubing, which was heated to 320°C, for a hold-up time of about 2.8 min. A second deactivator was then injected into the stream. The deactivated polymer stream thus obtained was flashed into the barrel of a ram extruder heated to about 220°C, the gaseous matter obtained being removed from the extruder. The molten polymer obtained was periodically extruded into a mould having a depth of 1 mm and a diameter of 40 mm and then rapidly cooled to ambient temperature. The colour of the plaque thus obtained was measured on a Hunter* L,a,b colourimeter, the measurement being on four plaques stacked in a holder having a black background.

The present invention is illustrated by the following examples. In the examples the solvent was cyclohexane and the monomer was ethylene unless specified to the contrary.

Example I

The catalyst was prepared by in-line mixing of (i) a solution of titanium tetrachloride (1.28 mmol/l) and vanadium oxytrichloride (0.22 mmol/l) in cyclohexane with (ii) a solution of 1.5 mmol/l of diethylaluminum chloride in cyclohexane, the atomic ratio of aluminum to titanium plus vanadium being 1:1. After about 30 seconds, a stream of hot cyclohexane was injected into the catalyst mixture, the resultant stream having a temperature of 210°C. The stream was maintained at this temperature for one minute.

The catalyst obtained using the above procedure was fed into the reactor. A co-catalyst of either diethyl trimethyl siloxalane or triethyl aluminum was also fed to the reactor, the triethyl aluminum co-catalyst being for purposes of comparison. Each co-catalyst was used as a 3 mmol/l solution in cyclohexane and the rate of feed to the reactor was adjusted in each instance so as to obtain optimum catalyst activity. The reactor effluent was treated as described hereinbefore for experiments for measurement of catalyst activity.

Further process conditions and the results obtained are given in Table I.

This example demonstrates that a siloxalane co-catalyst can be at least as effective a co-catalyst as the comparative triethyl aluminum for the catalyst system of this example.

---

*denotes trade mark.

TABLE I

| Run No. | Reactor Temp. (°C) | HUT* | Co-Catalyst** | Catalyst Activity (K_p) |
|---|---|---|---|---|
| 1 | 180 | 3.1 | A | 243 |
| 2 | 210 | 2.9 | A | 209 |
| 3 | 230 | 2.8 | A | 98 |
| 4 | 250 | 2.6 | A | 26 |
| 5 | 280 | 2.4 | A | 14 |
| 6 | 180 | 5.7 | A | 531 |
| 7 | 210 | 5.0 | A | 75 |
| 8 | 250 | 4.8 | A | 25 |
| 9 | 280 | 4.5 | A | 6.2 |
| 10 | 130 | 3.3 | B | 225 |
| 11 | 170 | 3.2 | B | 111 |
| 12 | 200 | 3.0 | B | 50 |
| 13 | 240 | 2.4 | B | 14 |
| 14 | 255 | 2.2 | B | 11 |
| 15 | 280 | 2.1 | B | 5.3 |
| 16 | 298 | 2.1 | B | 3.7 |

* HUT=hold-up time in minutes
** A=1,1,1-trimethyl-3,3-diethyl-siloxalane
    B=triethyl aluminum

Example II
    The catalyst was prepared using the procedure of Example I except that the concentration of catalyst precursors was 2.55 mmol/l, 0.45 mmol/l and 3.0 mmol/l for the solutions of titanium tetrachloride, vanadium oxytrichloride and diethylaluminum chloride respectively. The concentration of the co-catalyst, either 1,1,1-trimethyl-3,3-diethyl siloxalane or comparative triethyl aluminum was 6.0 mmol/l. The polymerization reactor was operated at 235°C and with a hold-up time of approximately 2.8 minutes. The reactor effluent was treated as described hereinbefore for experiments for measurement of polymer colour.
    Further process conditions and the results obtained are given in Table II.
    This example demonstrates that the use of an alkyl siloxalane co-catalyst can yield polymer having a better colour i.e. a higher value of "L" and a lower value of "b", than triethyl aluminum under the same process conditions.

7

### TABLE II

| Run No. | 17 | 18 |
|---|---|---|
| Co-catalyst | Et$_2$AlOSiMe$_3$ | AlEt$_3$ |
| First Deactivator* | water | water |
| Ratio | 0.5 | 0.5 |
| Second Deactivator* | Calcium octoate | Calcium octoate |
| Ratio | 0.21 | 0.22 |
| Catalyst Residues** | 40 | 40 |
| Colour Rating*** | 72.2/−1.4 | 66.6/+0.7 |

* Two stage deactivator system was used. Ratio is deactivator/halogen plus alkyl radicals plus R SiO-groups, on a molar basis

** Ti+V in polymer.

*** L/b values from Hunter L,a,b colourimeter. Higher values of "L" and lower values of "b" indicate polymer of more acceptable colour.

### Example III

The catalyst was prepared using the procedure of Example I, using solutions of titanium tetrachloride (5.1 mmoles/litre), vanadium oxytrichloride (0.9 mmol/l) and diethylaluminum chloride (6.0 mmol/l) in cyclohexane. Ethylene was polymerized using the procedure of Example I except that the co-catalyst was a solution of pentaethylsiloxalane (18 mmol/l) in hexane/cyclohexane. The co-catalyst had been prepared by the slow addition of solution of triethylsilanol in cyclohexane to a solution of triethyl aluminum in hexane under a slight purge of dry oxygen-free nitrogen.

With a reactor temperature of 240°C and a hold-up time of 2.6 minutes, the catalyst activity (Kp) was 83.

### Example IV

The procedure of Example III was repeated except that the co-catalyst was 1,1,1-trihexyl-3,3-diethyl-siloxalane (9 mmol/l).

With a reactor temperature of 240°C and a hold-up time of 2.6 minutes, the catalyst activity (Kp) was 72.

### Example V

The catalyst was prepared using the procedure of Example I using solutions of titanium tetrachloride (4.4 mmol/l, vanadium oxytrichloride (0.77 mmol/l) and diethylaluminum chloride (5.1 mmol/l) in cyclohexane. Ethylene was polymerized using the procedure of Example I except that a 120 ml autoclave reactor was used instead of the 70 ml reactor and the co-catalyst was a solution of Et$_2$AlOSiMe$_2$(OSiMe$_2$)OSiMe$_2$Et (20.5 mmol/l) in cyclohexane. The co-catalyst was prepared according to the procedure described by H. Jenkner in Zeitschrift fuer Naturforschung 1959, Vol B, p 133—134.

Using a reactor temperature of 230°C and a hold-up time of 2.8 minutes, the catalyst activity (Kp) was 22.

### Example VI

The catalyst was prepared using the procedure of Example I using solutions of titanium tetrachloride (2.55 mmol/l) vanadium oxytrichloride (0.45 mmol/l) and diethyl aluminum chloride (3 mmol/l). Ethylene was polymerized using the procedure of Example I and solutions of the co-catalyst, shown in Table III, in hexane and/or cyclohexane.

1,1,1-Triethyl-3,3-dimethyl siloxalane was prepared according to the procedure described in EP—A—0133750 (inventor C. G. Russell); Et$_2$AlOSiMe$_3$ was prepared according to the procedure of H. Jenkner in U.S. Patent 2 897 220, issued 1959 July 29; Et$_2$AlOSiMe$_2$OSiMe$_2$Et was prepared, using neat solutions, according to the procedures of the application of C. G. Russell except that the molar ratio of aluminum alkyl to siloxane was two.

Using a reactor temperature of 235°C, the results obtained were as follows:

8

# 0 131 420

TABLE III

| Run No.* | Co-catalyst | Catalyst activity (Kp) |
|---|---|---|
| 17 | Et$_2$AlOSiEtMe$_2$ | 65 |
| 18 | Et$_2$AlOSiMe$_3$ | 44 |
| 19 | Et$_2$AlOSiMe$_2$OSiMe$_2$Et | 15 |
| 20** | AlEt$_3$ | 20 |

* Hold-up times were 3.0 minutes for Runs 17 and 18, 3.2 minutes for Run 19 and 3.1 minutes for Run 20.
** Comparative run.

Example VII

The catalyst was prepared using the procedure of Example I using solutions of titanium tetrachloride (1.05 mmol/l), vanadium oxytrichloride (1.05 mmol/l) and diethylaluminum chloride (2.1 mmol/l) in cyclohexane; the atomic ratio of titanium to vanadium was 1:1. Ethylene was polymerized using the procedure of Example I using a solution of Et$_2$AlOSiMe$_3$ (8.4 mmol/l) in cyclohexane as co-catalyst.

Using a reactor temperature of 235°C and a hold-up time of 2.8 minutes, the catalyst activity (Kp) was 445.

In a comparative run using triethyl aluminum as co-catalyst the catalyst activity (Kp) was 86.

**Claims**

1. A coordination catalyst for the preparation of high molecular weight polymers of α-olefins, said catalyst having been obtained by combining a first component with a second component, said first component being prepared by a method selected from the group consisting of (i) admixing a solution of an organoaluminum compound in inert hydrocarbon solvent with a solution of titanium tetrahalide and vanadium oxytrihalide in inert hydrocarbon solvent at a temperature of less than 30°C and heating the resultant admixture to a temperature of 150—300°C for a period of from 5 seconds to 60 minutes and (ii) admixing a solution of an organoaluminum compound in inert hydrocarbon solvent with a solution of titanium tetrahalide in inert hydrocarbon solvent at a temperature of less than 30°C, heating the resultant admixture to a temperature of 150—300°C for a period of from 5 seconds to 60 minutes and admixing vanadium oxytrihalide with the admixture so obtained, said organoaluminum compound being of the formula AlR$_n$X$_{3-n}$ and being admixed with the titanium and vanadium compounds so that the atomic ratio of aluminum in the first component to titanium plus vanadium is in the range 0.2—2.0 where R is alkyl, cycloalkyl, aryl or alkyl-substituted aryl and has 1—20 carbon atoms; n=1, 1.5, 2 or 3 and X is halogen, characterised in that the second component is a solution of an alkylsiloxalane in inert hydrocarbon solvent.

2. The catalyst of Claim 1 in which the ratio of titanium to vanadium on an atomic basis is 0.5:1 to 30:1.

3. The catalyst of Claim 1 in which the ratio of titanium to vanadium on an atomic basis is 0.8:1 to 1.2:1.

4. The catalyst of any one of Claims 1 to 3 in which the alkyl siloxalane is of the formula R'$_3$SiO(R'$_2$SiO)$_m$AlR'$_2$ where each R' is independently selected from the group consisting of alkyl, cycloalkyl, aryl or alkyl-substituted aryl and has 1—20 carbon atoms, and m is 0 or an integer.

5. The catalyst of Claim 4 in which m is 0 to 4.

6. The catalyst of any one of Claims 1 to 5 in which the alkyl groups of the alkylsiloxalane are selected from alkyl or cycloalkyl.

7. The catalyst of any one of Claims 1 to 3 in which the alkylsiloxalane is diethyl trimethyl siloxalane.

8. The catalyst of any one of Claims 1 to 3, in which the alkylsiloxalane is selected from the group consisting of Et$_2$AlOSiEt$_3$, Et$_2$AlOSi(C$_6$H$_{11}$)$_3$ and Et$_2$AlOSiEtMe$_2$, and isomers thereof, where Me=methyl and Et=ethyl.

9. The catalyst of any one of Claims 1 to 8 in which the ratio of siloxalane to titanium plus vanadium is in the range 0.9—10 on a molar basis.

10. The catalyst of Claim 9 in which the ratio of siloxalane to titanium plus vanadium is in the range of 1—4 on a molar basis.

11. A solution process for the preparation of high molecular weight polymers of α-olefins selected from the group consisting of homopolymers of ethylene and copolymers of ethylene and C$_3$—C$_{12}$ α-olefins, said process comprising feeding monomer selected from the group consisting of ethylene and mixtures of ethylene and at least one C$_3$—C$_{12}$ α-olefin, a coordination catalyst and inert hydrocarbon solvent to a reactor, polymerizing said monomer at a temperature in the range of 105—320°C and recovering the polymer so obtained, characterised in that a two-component catalyst system according to any one of the preceding claims is used.

12. A process according to claim 11 in which the recovery of the polymer includes the steps of deactivating the catalyst in the solution obtained from the reactor by sequentially admixing therewith a

9

minor amount of water followed by a solution of a salt of an alkaline earth metal or zinc and an aliphatic carboxylic acid dissolved in hydrocarbon solvent, separating the hydrocarbon solvent and other volatile matter from the resultant solution and recovering a composition comprising said high molecular weight polymer, the amount of water being 0.25—1.5 moles of water per mole of halogen plus alkyl radicals plus $R_3SiO$—groups.

13. A process according to claim 11 or claim 12 in which the polymer so obtained is treated with saturated steam at a temperature below the agglomeration temperature of the polymer for 1 to 16 hours.

**Patentansprüche**

1. Ein Koordinationskatalysator zur Herstellung von α-Olefinpolymeren von hohem Molekulargewicht, welcher Katalysator durch Kombinieren eines ersten Bestandteils mit einem zweiten Bestandteil erhalten wurde, welcher erste Bestandteil nach einem Verfahren hergestellt wurde, das aus der Gruppe (i) Mischen einer Lösung einer Organoaluminiumverbindung in einem inerten Kohlenwasserstofflösungsmittel mit einer Lösung von Titantetrahalid und Vanadiumoxytrihalid in einem inerten Kohlenwasserstofflösungsmittel bei einer Temperatur von weniger als 30°C und Erwärmen der entstandenen Mischung auf eine Temperatur von 150—300°C für einen Zeitraum von 5 Sekunden bis 60 Minuten oder (ii) Mischen einer Lösung einer Organoaluminiumverbindung in einem inerten Kohlenwasserstofflösungsmittel mit einer Lösung von Titantetrahalid in einem inerten Kohlenwasserstofflösungsmittel bei einer Temperatur von weniger als 30°C, Erwärmen des entstandenen Gemisches auf eine Temperatur von 150—300°C für einen Zeitraum von 5 Sekunden bis 60 Minuten und Mischen von Vanadiumoxytrihalid mit der so erhaltenen Mischung, gewählt wird, wobei die genannte Organoaluminiumverbindung die Formel $AlR_nX_{3-n}$ aufweist und mit der Titan- und Vanadiumverbindung so vermischt wird, daß das Atomverhältnis von Aluminium im ersten Bestandteil zu Titan plus Vanadium im Bereich von 0,2—2,0 liegt, worin R für Alkyl, Cycloalkyl, Aryl oder alkyl-substituiertes Aryl mit 1—20 C-Atomen steht; n=1, 1,5, 2 oder 3 und X Halogen bedeutet, dadurch gekennzeichnet, daß der zweite Bestandteil eine Lösung eines Alkylsiloxalans in einem inerten Kohlenwasserstofflösungsmittel ist.

2. Der Katalysator nach Anspruch 1, in dem das Verhältnis von Titan zu Vanadium auf Atombasis 0,5:1 bis 30:1 beträgt.

3. Der Katalysator nach Anspruch 1, in dem das Verhältnis von Titan zu Vanadium auf Atombasis 0,8:1 bis 1,2:1 beträgt.

4. Der Katalysator nach einem der Ansprüche 1 bis 3, in dem das Alkylsiloxalan die Formel $R'_3SiO(R'_2SiO)_m$—$AlR'_2$ aufweist, worin jedes R' unabhängig aus der Gruppe gewählt wird, die aus Alkyl, Cycloalkyl, Aryl oder alkyl-substituiertem Aryl besteht, und 1—20 C-Atome aufweist, und m 0 oder eine ganze Zahl darstellt.

5. Der Katalysator nach Anspruch 4, in dem m für 0 bis 4 steht.

6. Der Katalysator nach einem der Ansprüche 1 bis 5, in dem die Alkylgruppen des Alkylsiloxalans aus Alkyl oder Cycloalkyl gewählt werden.

7. Der Katalysator nach einem der Ansprüche 1 bis 3, in dem das Alkylsiloxalan Diäthyltrimethylsiloxalan ist.

8. Der Katalysator nach einem der Ansprüche 1 bis 3, in dem das Alkylsiloxalan aus der Gruppe $Et_2AlOSiEt_3$, $Et_2AlOSi(C_6H_{11})_3$ und $Et_2AlOSiEtMe_2$ und Isomeren derselben gewählt ist, worin Me=Methyl und Et=Äthyl.

9. Der Katalysator nach einem der Ansprüche 1 bis 8, in dem das Verhältnis von Siloxalan zu Titan plus Vanadium im Bereich von 0,9—10 auf Molbasis liegt.

10. Der Katalysator nach Anspruch 9, in dem das Verhältnis von Siloxalan zu Titan plus Vanadium im Bereich von 1—4 auf Molbasis liegt.

11. Ein Lösungsverfahren zur Herstellung von α-Olefin-Polymeren von hohem Molekulargewicht ausgewählt aus der Gruppe, die aus Homopolymeren des Äthylens und Kopolymeren des Äthylens mit $C_3$—$C_{12}$-α-Olefinen besteht, das genannte Verfahren umfassend Zuführen eines Monomers, das aus der Gruppe bestehend aus Äthylen und Mischungen von Äthylen mit wenigstens einem $C_3$—$C_{12}$-α-Olefin gewählt ist, eines Koordinationskatalysators und eines inerten Kohlenwasserstofflösungsmittels in ein Reaktionsgefäß, Polymerisieren des genannten Monomers bei einer Temperatur innerhalb eines Bereiches von 105—320°C und Gewinnen des so erhältenen Polymers, dadurch gekennzeichnet, daß ein Zwei-Komponenten-Katalysatorsystem nach einem der vorhergehenden Ansprüche verwendet wird.

12. Ein Verfahren nach Anspruch 11, in dem das Gewinnen des Polymers die Schritte des Deaktivierens des Katalysators in der aus dem Reaktionsgefäß erhaltenen Lösung durch aufeinanderfolgendes Mischen derselben mit einer geringen Menge Wasser gefolgt von einer Lösung eines Salzes eines Erdalkalimetalls oder von Zink und einer aliphatischen Carbonsäure gelöst in einem inerten Kohlenwasserstofflösungsmittel, Abtrennen des Kohlenwasserstofflösungsmittels und anderer flüchtiger Substanzen aus der entstandenen Lösung und Rückgewinnung einer Zusammensetzung, die das genannte Polymer von hohem Molekulargewicht enthält, umfaßt, wobei die Wassermenge 0,25—1,5 Mol Wasser pro Mol Halogen plus Alkylgruppen plus $R_3SiO$-Gruppen beträgt.

13. Ein Verfahren nach Anspruch 11 oder 12, in dem das so erhaltene Polymer mit gesättigtem

**0 131 420**

Wasserdampf bei einer Temperatur unter der Agglomerationstemperatur des Polymers 1—16 Stunden lang behandelt wird.

**Revendications**

1. Catalyseur de coordination pour la préparation de polymères d'α-oléfines de poids moléculaire élevé, ledit catalyseur étant obtenu en combinant un premier composant avec un second composant, ledit premier composant étant préparé par un procédé choisi dans le groupe consistant à (i) mélanger une solution d'un composé organoaluminium dans un solvant hydrocarboné inerte avec une solution de tétrahalogénure de titane et d'oxytrihalogénure de vanadium dans un solvant hydrocarboné inerte à une température inférieure à 30°C et chauffer le mélange résultant à une température de 150—300°C pendant une période de temps comprise entre 5 secondes et 60 minutes, et (ii) mélanger une solution d'un composé organoaluminium dans un solvant hydrocarboné inerte avec une solution de tétrahalogénure de titane dans un solvant hydrocarboné inerte à une température inférieure à 30°C, chauffer le mélange résultant à une température de 150—300°C pendant une période de temps comprise entre 5 secondes et 60 minutes et mélanger l'oxytrihalogénure de vanadium avec le mélange ainsi obtenu, ledit composé organoaluminium étant de formule $AIR_nX_{3-n}$ et étant mélangé avec les composés de titane et de vanadium de sorte que le rapport atomique de l'aluminium dans le premier composant au titane plus vanadium est dans le domaine de 0,2—2,0, où R est un alkyle, un cycloalkyle, un aryle ou un aryle substitué en alkyle et possède de 1 à 20 atomes de carbone; n=1, 1,5, 2 ou 3 et X est un halogène, caractérisé en ce que le second composant est une solution d'un alkylsiloxalane dans un solvant hydrocarboné inerte.

2. Catalyseur de la revendication 1, dans lequel le rapport du titane au vanadium sur une base atomique est compris entre 0,5:1 et 30:1.

3. Catalyseur de la revendication 1, dans lequel le rapport du titane au vanadium sur une base atomique est compris entre 0,8:1 et 1,2:1.

4. Catalyseur selon l'une quelconque des revendications 1 à 3, dans lequel l'alkylsiloxalane est de formule: $R'_3SiO(R'_2SiO)_mAIR'_2$, où chaque R' est indépendamment choisi dans le groupe constitué d'alkyle, de cycloalkyle, d'aryle ou d'aryle substitué en alkyle et possède de 1 à 20 atomes de carbone, et m est égal à 0 ou est un nombre entier.

5. Catalyseur de la revendication 4, dans lequel m est compris entre 0 et 4.

6. Catalyseur selon une quelconque des revendications 1 à 5, dans lequel les groupes alkylés de l'alkylsiloxalane sont choisis entre l'alkyle et le cycloalkyle.

7. Catalyseur selon une quelconque des revendications 1 à 3, dans lequel l'alkylsiloxalane est du diéthyltriméthylsiloxalane.

8. Catalyseur selon une quelconque des revendications 1 à 3, dans lequel l'alkylsiloxalane est choisi dans le groupe constitué de $Et_2AIOSiEt_3$, $Et_2AIOSi(C_6H_{11})_3$ et $Et_2AIOSiEtMe_2$, et de leurs isomères, où Me=méthyle et Et=Ethyle.

9. Catalyseur selon une quelconque des revendications 1 à 8, dans lequel le rapport du siloxalane au titane plus vanadium est dans le domaine de 0,9—10 sur une base molaire.

10. Catalyseur de la revendication 9, dans lequel le rapport du siloxalane au titane plus vanadium est dans le domaine de 1—4 sur une base molaire.

11. Procédé pour la préparation de polymères d'α-oléfines à poids moléculaire élevé en solution, choisis dans le groupe constitué des homopolymères d'éthylène et des copolymères d'éthylène et d'α-oléfines en $C_3$—$C_{12}$, ledit procédé comprenant l'introduction d'un monomère choisi dans le groupe constitué de l'éthylène et de mélanges d'éthylène et d'au moins un α-oléfine en $C_3$—$C_{12}$, un catalyseur de coordination et un solvant hydrocarboné inerte dans un réacteur, la polymérisation dudit monomère à une température dans le domaine de 105—320°C et la récupération du polymère ainsi obtenu, caractérisé en ce qu'un système de catalyseur à deux composants selon l'une quelconque des revendications précédentes est utilisé.

12. Procédé selon la revendication 11, dans lequel la récupération du polymère comporte les étapes consistant à désactiver le catalyseur dans la solution obtenue à partir du réacteur en mélangeant séquentiellement avec celle-ci une petite quantité d'eau suivie par une solution d'un sel d'un métal alcalino-terreux ou de zinc et d'un acide carboxylique aliphatique dissous dans le solvant hydrocarboné, séparer le solvant hydrocarboné et toute autre matière volatile de la solution résultante et récupérer une composition comprenant ledit polymère à poids moléculaire élevé, la quantité d'eau étant de 0,25 à 1,5 moles d'eau par mole d'halogène plus les radicaux alkylés plus les groupes $R_3SiO$.

13. Procédé selon la revendication 11 ou la revendication 12, dans lequel le polymère ainsi obtenu est traité avec de la vapeur saturée à une température inférieure à la température d'agglomération du polymère pendant une à seize heures.